# EUROPEAN PATENT APPLICATION

(11) **EP 3 610 719 A1**
(43) Date of publication of application: **19.02.2020**
(21) Application number: 18784611.8
(22) Date of filing: 20.03.2018
(51) Int. Cl.: A01G 9/02, A01G 27/00, A01G 31/00

(54) **HYDROPONIC CULTURE APPARATUS**

(30) Priority: 13.04.2017 JP 2017079756
(71) Applicant: Panasonic Intellectual Property Management Co., Ltd., Osaka-shi, Osaka 540-6207 (JP)
(72) Inventor: OGATA, Satoshi, Osaka-shi, Osaka 540-6207 (JP)
(74) Representative: Müller-Boré & Partner Patentanwälte PartG mbB
(86) International application number: PCT/JP2018/011017
(87) International publication number: WO 2018/190087

(57) **Abstract**

A hydroponic culture apparatus (200) is provided with a support section (60) which can support a seed tuber (10), an underground stem (3) and a new tuber (6) in such a manner that the seed tuber (10), the underground stem (3) and the new tuber (6) cannot be immersed in a first nutrient solution (9) and a taproot (4) can be immersed in the first nutrient solution (9), wherein the support section (60) is equipped with a nutrient solution supply section (61) which can directly supply a second nutrient solution (9X) that is the same as or different from the first nutrient solution (9) to a first rootlet (6a) that extends from the new tuber (6) and/or a second rootlet (3a) that extends from the underground stem (3).

## Description

### TECHNICAL FIELD

The present invention relates to hydroponic apparatuses for growing plants without using soil.

### BACKGROUND ART

Various hydroponic apparatuses have been being developed (see Patent Literature 1). Some conventional hydroponic apparatuses are used for hydroponics for plants having tubers underground. In such hydroponic apparatuses, typically, a main root extending vertically from the main stem is soaked in nutrient solution, and thereby nutrients are supplied to tubers through the main root.

### CITATION LIST

### PATENT LITERATURE

Patent Literature 1: Japanese Unexamined Patent Application Publication No. 2014-217290

### SUMMARY OF INVENTION

In natural cultivation of tuberous plants, nutrients in the ground are supplied to tubers not only through main roots but also through rootlets extending from new tubers formed on underground stems extending horizontally from the main stem and rootlets extending from the underground stems.

However, there is no conventional hydroponic apparatus that supplies nutrients to tubers through rootlets extending from new tubers and rootlets extending from underground stems. In other words, in conventional hydroponics, nutrients are supplied to plants only through main roots. Hence, for some plants, depending on the kind of plant, even if specific nutrients are absorbed from the main roots and supplied to the main stem, the nutrients are not supplied to the new tubers.

The present invention has been made in light of the problems that conventional techniques have. Hence, an object of the present invention is to provide a hydroponic apparatus that enables nutrients to be supplied to new tubers not only through main roots but through rootlets extending from the new tubers and rootlets extending from underground stems.

To solve the above problems, a hydroponic apparatus according to an aspect of the present invention is a hydroponic apparatus for growing a plant in which a main stem extends from a seed tuber, an underground stem and a main root extend from the main stem, and a new tuber is formed on the underground stem, including: a cultivation tank that contains first nutrient solution; a divider that divides an aboveground space in which an aboveground portion of the plant grows and an underground space in which an underground portion of the plant grows; and a support portion that divides the underground space into a first space in which the underground stem and the new tuber grow and a second space in which the main root grows and that supports the seed tuber and the new tuber such that the seed tuber, the new tuber, and the underground stem are not soaked in the first nutrient solution, and that the main root is soaked in the first nutrient solution, in which the support portion has a nutrient-solution supply portion that supplies second nutrient solution which is the same as or different from the first nutrient solution directly to at least one of a first rootlet extending from the new tuber and a second rootlet extending from the underground stem.

The present invention makes it possible to provide a hydroponic apparatus that enables nutrients to be supplied to new tubers not only through main roots but through rootlets extending from the new tubers and rootlets extending from underground stems which grow from the main stem.

### BRIEF DESCRIPTION OF DRAWINGS

[Fig. 1] Fig. 1 is a cross-sectional schematic diagram for explaining the overall configuration of a hydroponic apparatus according to Embodiment 1 of the present invention.
[Fig. 2] Fig. 2 is an internal perspective diagram for explaining the internal space of the hydroponic apparatus according to Embodiment 1.
[Fig. 3] Fig. 3 is an internal perspective diagram for explaining the internal space of a hydroponic apparatus according to Embodiment 2.
[Fig. 4] Fig. 4 is a perspective diagram for explaining the structure of a nutrient-solution supply portion of a hydroponic apparatus according to Embodiment 3.
[Fig. 5] Fig. 5 is a cross-sectional schematic diagram for explaining the overall configuration of a hydroponic apparatus according to Embodiment 4 of the present invention.
[Fig. 6] Fig. 6 is a perspective diagram for explaining the structure of a nutrient-solution supply portion of the hydroponic apparatus according to Embodiment 4.
[Fig. 7] Fig. 7 is a perspective diagram for explaining the structure of a nutrient-solution supply portion of a hydroponic apparatus according to Embodiment 5.

### DESCRIPTION OF EMBODIMENTS

Hereinafter, hydroponic apparatuses according to embodiments will be described with reference to the drawings.

In each embodiment, the portions denoted by the same reference signs have the same functions. Hence, description of the functions of the portions denoted by the same reference signs will not be repeated unless otherwise necessary.

### Embodiment 1

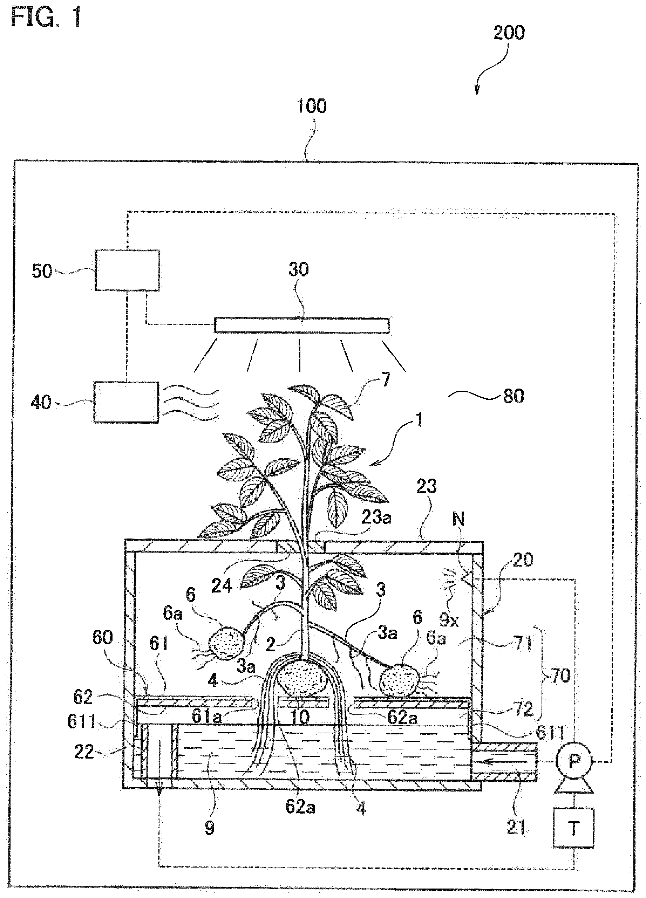

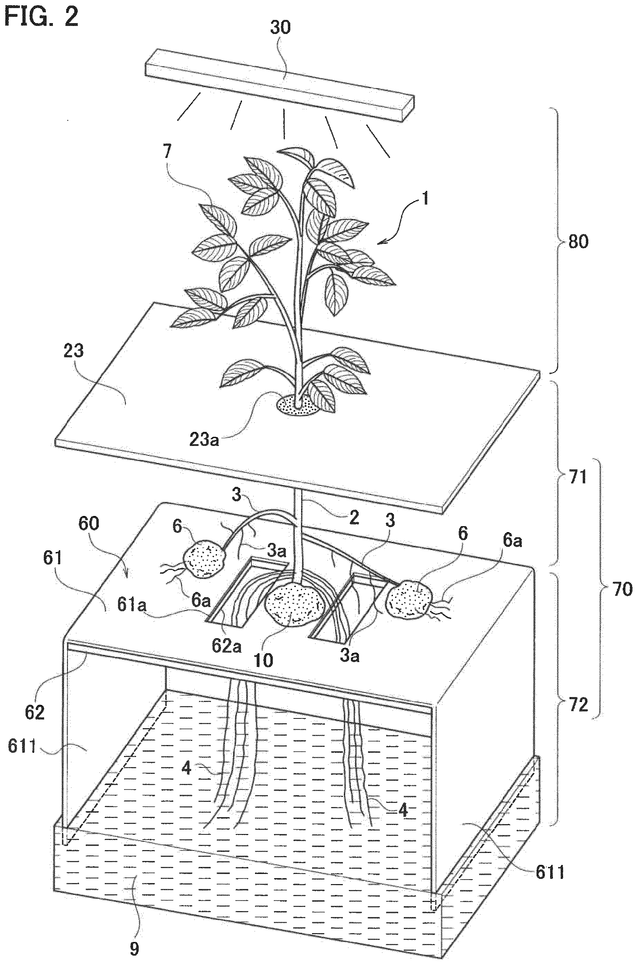

As illustrated in Figs. 1 and 2, an example of a hydroponic apparatus 200 in this embodiment includes a case 100 like a container having a hexahedral structure. With it, a plant 1 grows in a space shielded from the external space by the case 100. The hydroponic apparatus 200 in this embodiment is what is called a hydroponic apparatus for growing the plant 1 without using soil. The hydroponic apparatus 200 is for growing the plant 1 in which a main stem 2 extends from a seed tuber 10, underground stems 3 and main roots 4 extend from the main stem 2, and new tubers 6 are formed on the underground stems 3. In this embodiment, it is assumed that the plant 1 is a potato as an example of a root vegetable.

The hydroponic apparatus 200 includes a cultivation tank 20 inside the case 100. While the plant 1 is grown in the cultivation tank 20, the cultivation tank 20 has first nutrient solution 9 stored in it. The first nutrient solution 9 is supplied to the cultivation tank 20 via a supply pipe 21 by a pump P.

The first nutrient solution 9 is discharged to the outside through a discharge pipe 22 extending upward from the bottom surface of the cultivation tank 20. Thus, the height of the first nutrient solution 9 in the cultivation tank 20 is lower than or equal to the height from the bottom surface of the cultivation tank 20 to the upper end of the discharge pipe 22. The distal ends of the main roots 4 of the plant 1 are soaked in the first nutrient solution 9.

The cultivation tank 20 has a divider 23 attached near its upper end opening. The divider 23 divides an aboveground space 80 in which aboveground portions of the plant 1 grow and an underground space 70 in which underground portions of the plant 1 grow. The divider 23 has a through hole 23a into which the plant 1 is inserted. An elastic member 24 is fit in between the through hole 23a and the plant 1.

The hydroponic apparatus 200 in this embodiment includes lighting equipment 30, an air conditioner 40, the pump P, a tank T, and a controller 50. The air conditioner 40 is capable of adjusting both temperature and humidity. The lighting equipment 30 projects light onto leaves 7 that are aboveground portions of the plant 1. The air conditioner 40 adjust the temperature and humidity of the aboveground space. The pump P circulates the first nutrient solution 9 between the cultivation tank 20 and the tank T. The controller 50 controls the lighting equipment 30, air conditioner 40, and pump P.

As can be seen from Figs. 1 and 2, the hydroponic apparatus 200 includes a support portion 60 disposed below the divider 23 inside the cultivation tank 20. In this embodiment, the support portion 60 is a member in a flat-plate shape supporting the seed tuber 10 and the new tubers 6 from below.

As illustrated in Figs. 1 and 2, the support portion 60 divides the underground space 70 into a first space 71 in which the underground stems 3 and the new tubers 6 grow and a second space 72 in which the main roots 4 grow. The support portion 60 supports the seed tuber 10, underground stems 3, and new tubers 6 such that the seed tuber 10, underground stems 3, and new tubers 6 are not soaked in the first nutrient solution 9, but that the main roots 4 are soaked in the first nutrient solution 9.

As illustrated in Figs. 1 and 2, the support portion 60 includes a nutrient-solution supply portion 61 having at least one hole 61a that the main roots 4 can pass through but the seed tuber 10 cannot pass through. The support portion 60 includes a plate member 62 having at least one hole 62a that the main roots 4 can pass through but the seed tuber 10 cannot pass through. The main roots 4 can extend through the hole 61a and the hole 62a to the first nutrient solution 9. Thus, the support portion 60 allows the main roots 4 to be soaked in the first nutrient solution 9 while supporting the seed tuber 10.

In this embodiment, the nutrient-solution supply portion 61 sucks up the first nutrient solution 9 stored in the second space 72 of the cultivation tank 20 and supplies it to first rootlets 6a extending from the new tubers 6 and second rootlets 3a extending from the underground stems 3.

The hydroponic apparatus 200 in this embodiment can supply the first nutrient solution 9 to the new tubers 6 through the first rootlets 6a and the second rootlets 3a. Thus, with the support portion 60, it is possible to supply the first nutrient solution 9 to the main roots 4, supply the first nutrient solution 9 to the first rootlets 6a and the second rootlets 3a, and support the seed tuber 10, underground stems 3, and new tubers 6.

In this embodiment, the nutrient-solution supply portion 61 is positioned at the bottom of the first space 71 and is a liquid retainable member that absorbs and retains the first nutrient solution 9. The liquid retainable member is, for example, non-woven fabric. The liquid retainable member composing the nutrient-solution supply portion 61 may be a water absorption sheet. As can be seen from Figs. 1 and 2, the liquid retainable member serving as the nutrient-solution supply portion 61 is exposed on the upper face of the support portion 60 such that the liquid retainable member is in direct contact with the first rootlets 6a and the second rootlets 3a. This makes it possible to supply the first nutrient solution 9 reliably to the first rootlets 6a and the second rootlets 3a.

In this embodiment, the liquid retainable member has extension portions 611 which hang down from ends of the support portion 60. In this embodiment, the support portion 60 is composed of the horizontal portion of the liquid retainable member, excluding the extension portions 611, and the plate member 62 extending horizontally. The nutrient-solution supply portion 61 is composed of the horizontal portion and extension portions 611 of the liquid retainable member. The extension portions 611 are soaked in the first nutrient solution 9, and thereby the first nutrient solution 9 is supplied to the entire liquid retainable member including the horizontal portion of the liquid retainable member. Here, in the case where the liquid retainable member, serving as the nutrient-solution supply portion 61, holds enough first nutrient solution 9 necessary through the growing period of the plant 1, the liquid retainable member does not need to have the extension portions 611. Alternatively, as in an embodiment described later, the nutrient-solution supply portion 61 may supply another nutrient solution different from the first nutrient solution 9 to the first rootlets 6a extending from the new tubers 6 and the second rootlets 3a extending from the underground stems 3. In this case, the different nutrient solution may be sprayed onto the non-woven fabric serving as the nutrient-solution supply portion 61, and the non-woven fabric may absorb and retain the different nutrient solution.

The first nutrient solution 9 absorbed through the first rootlets 6a extending from the new tubers 6 and the second rootlets 3a extending from the underground stems 3 are mainly supplied to the new tubers 6. The first nutrient solution 9 absorbed through the main roots 4 are mainly supplied to the stems and leaves 7 that are the aboveground portions of the plant 1.

### Embodiment 2

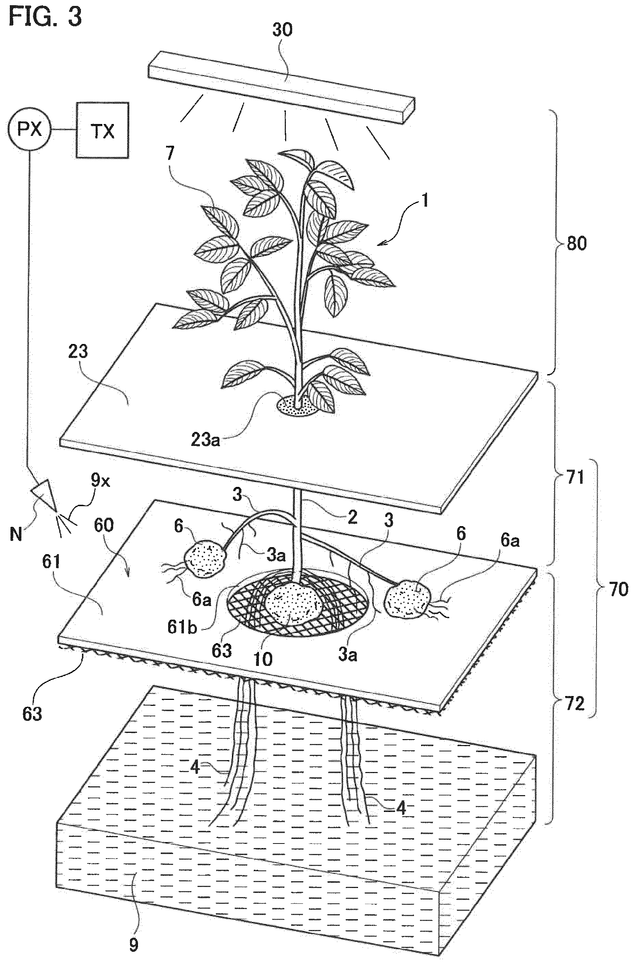

A hydroponic apparatus 200 of Embodiment 2 will be described with reference to Fig. 3. The hydroponic apparatus 200 in this embodiment is mostly the same as the hydroponic apparatus 200 in Embodiment 1. Accordingly, description made below is mainly for the different points between the hydroponic apparatus 200 in this embodiment and the hydroponic apparatus 200 in Embodiment 1.

As illustrated in Fig. 3, the hydroponic apparatus 200 in this embodiment includes a different tank TX that contains second nutrient solution 9X, a different pump PX that sends out the second nutrient solution 9X inside the different tank TX, and a spray N that sprays the second nutrient solution 9X sent out by the different pump PX, into the first space 71. The second nutrient solution 9X is supplied from the different tank TX to the spray N through piping that passes through from the outside to the inside of the cultivation tank 20. With these, by means of spray from the spray N, it is possible to bring the second nutrient solution 9X in contact with the first rootlets 6a extending from the new tubers 6 and the second rootlets 3a extending from the underground stems 3. Most of the sprayed second nutrient solution 9X is absorbed by the non-woven fabric, serving as the nutrient-solution supply portion 61, and retained in it. Thus, the second nutrient solution 9X retained in the nutrient-solution supply portion 61 is also supplied to the new tubers 6 through the first rootlets 6a and the second rootlets 3a.

The second nutrient solution 9X may have the same ingredients as the first nutrient solution 9, but in this embodiment, the second nutrient solution 9X has different ingredients from those of the first nutrient solution 9. Thus, the second nutrient solution 9X can supply to the new tubers 6, nutrients containing ingredients that the first nutrient solution 9 cannot supply to the new tubers 6. Thus, this achieves better growth of the new tubers 6.

As illustrated in Fig. 3, the support portion 60 in this embodiment includes a hole member 63 having multiple holes that the main roots 4 can pass through but the seed tuber 10 cannot pass through. The nutrient-solution supply portion 61 of the support portion 60 has an opening 61b that the main roots 4 can pass through with the seed tuber 10 placed on the hole member 63. The hole member 63 is a commonly-used net having a grid pattern. Thus, the main roots 4 can extend to the first nutrient solution 9, passing through the opening 61b and the multiple holes of the hole member 63. Thus, the support portion 60 allows the main roots 4 to be soaked in the first nutrient solution 9 while supporting the seed tuber 10. For the hole member 63, what is called a grating or the like may be used, instead of a net. The hole member 63 may have any structure, as long as it allows the main roots 4 to pass through and support the seed tuber 10.

### Embodiment 3

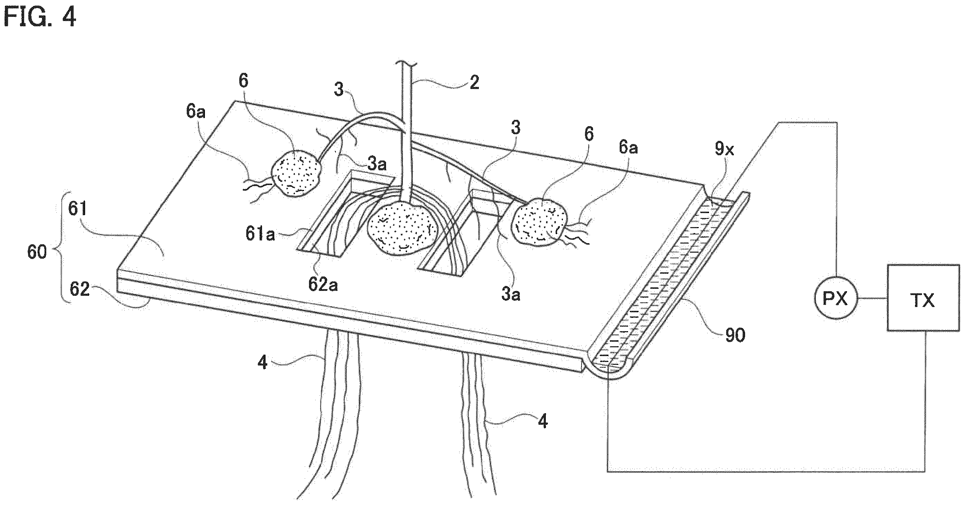

A hydroponic apparatus 200 in Embodiment 3 will be described with reference to Fig. 4. The hydroponic apparatus 200 in this embodiment is mostly the same as the hydroponic apparatus 200 in Embodiment 1. Accordingly, description made below is mainly for the different points between the hydroponic apparatus 200 in this embodiment and the hydroponic apparatus 200 in Embodiment 1.

As illustrated in Fig. 4, the hydroponic apparatus 200 in this embodiment further includes, in addition to the configuration of the hydroponic apparatus 200 in Embodiment 1, a nutrient-solution flow path 90 that leads the second nutrient solution 9X from the outside of the cultivation tank 20 to the nutrient-solution supply portion 61. Also in this embodiment, the nutrient-solution supply portion 61 is composed of non-woven fabric or a water absorption sheet, and thus, the second nutrient solution 9X that flows in the nutrient-solution flow path 90 soaks into the nutrient-solution supply portion 61. Thereby, the second nutrient solution 9X can be replenished from the outside of the cultivation tank 20 to the nutrient-solution supply portion 61.

Also in this embodiment, the liquid retainable member, serving as the nutrient-solution supply portion 61, is exposed on the upper face of the nutrient-solution supply portion 61 such that the liquid retainable member comes in direct contact with the first rootlets 6a and the second rootlets 3a. Thus, also in this embodiment, it is possible to supply the second nutrient solution 9X reliably to the first rootlets 6a and the second rootlets 3a.

In this embodiment, the nutrient-solution flow path 90 is part of a circulation flow path, through which the second nutrient solution 9X stored in the tank TX is circulated by the pump PX. Here, in the case where the first nutrient solution 9 and the second nutrient solution 9X have the same ingredients, the circulation flow path may be configured such that the second nutrient solution 9X is run in the nutrient-solution flow path 90 by the pump P and the tank T illustrated in Fig. 1. Alternatively, the second nutrient solution 9X may be supplied to the nutrient-solution supply portion 61 without using power such as a pump. For example, the nutrient-solution flow path 90 may have a funnel outside the cultivation tank 20, into which an operator can pour the second nutrient solution 9X stored in a container.

Note that also in this embodiment, a configuration including the support portion 60 and the spray N in Embodiment 2 may be used.

### Embodiment 4

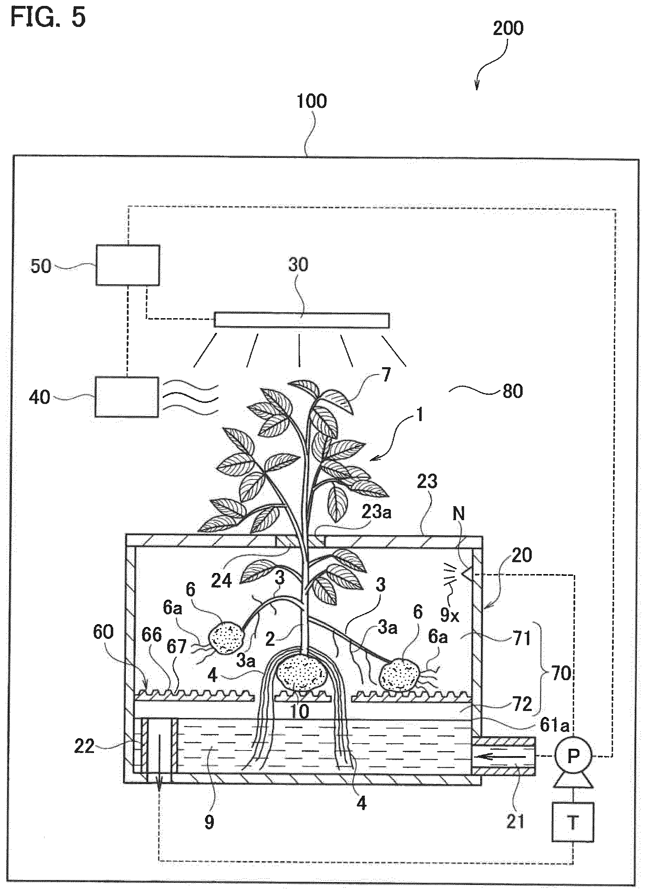

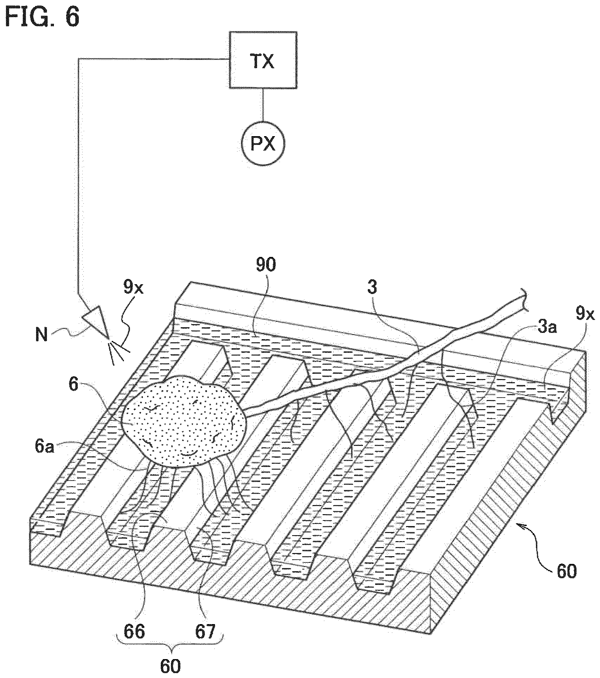

A hydroponic apparatus 200 in Embodiment 4 will be described with reference to Fig. 5 and 6. The hydroponic apparatus 200 in this embodiment is mostly the same as the hydroponic apparatus 200 in Embodiment 1. Accordingly, description made below is mainly for the different points between the hydroponic apparatus 200 in this embodiment and the hydroponic apparatus 200 in Embodiment 1.

As illustrated in Fig. 5, the support portion 60 includes multiple protrusions 66 that support the new tubers 6 and one or more recesses 67 that are positioned between the multiple protrusions 66 and function as a nutrient-solution supply portion in the presence of the second nutrient solution 9X. With these, the recesses 67 serving as a nutrient-solution supply portion can hold enough second nutrient solution 9X. This reduces a risk of the second nutrient solution 9X running short.

This embodiment further includes the spray N that sprays the second nutrient solution 9X into the first space 71 to supply the second nutrient solution 9X to the nutrient-solution supply portion 61. Thus, it is possible to supply the second nutrient solution 9X more easily to either the first rootlets 6a or the second rootlets 3a or both. Note that in this embodiment, part of the second nutrient solution 9X sprayed from the spray N comes in direct contact with the first rootlets 6a and the second rootlets 3a.

The recesses 67 serving as a nutrient-solution supply portion in this embodiment can retain the second nutrient solution 9X in an amount required for the growth of the plant 1. In this embodiment, the first rootlets 6a and the second rootlets 3a are soaked in the second nutrient solution 9X stored in the recesses 67, and thereby the second nutrient solution 9X is supplied to the new tubers 6.

Note that in this embodiment, as in Embodiment 1, the nutrient-solution flow path 90 is part of the circulation flow path, through which the second nutrient solution 9X stored in the tank TX is circulated by the pump PX. Here, in the case where the first nutrient solution 9 and the second nutrient solution 9X have the same ingredients, the circulation flow path may be configured such that the second nutrient solution 9X is run in the nutrient-solution flow path 90 by the pump P and the tank T illustrated in Fig. 1.

The multiple protrusions 66 and the at least one recess 67 may be formed by making small cuts in a plate member. In other words, the protrusions 66 and the at least one recess 67 may have any structure as long as they have portions for storing nutrient solution and a structure for supporting the new tubers 6 so as to prevent the new tubers 6 from being soaked in the stored nutrient solution.

### Embodiment 5

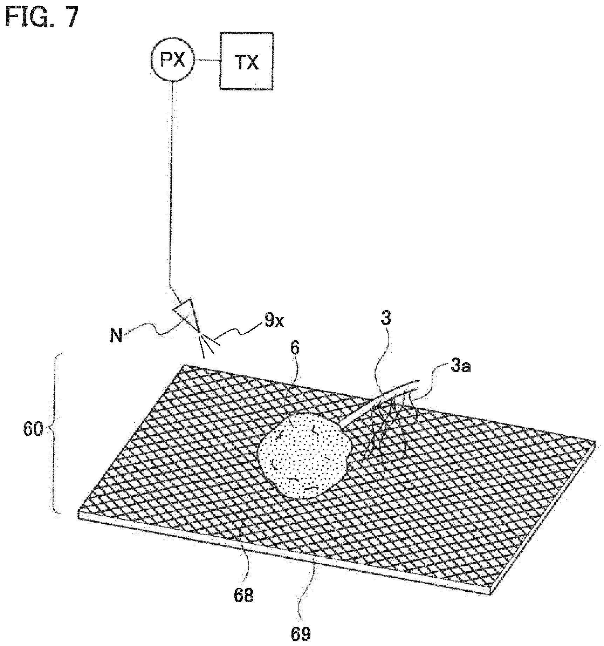

A hydroponic apparatus 200 of Embodiment 5 will be described with reference to Fig. 7. The hydroponic apparatus 200 in this embodiment is mostly the same as the hydroponic apparatus 200 in Embodiment 1. Accordingly, description made below is mainly for the different points between the hydroponic apparatus 200 in this embodiment and the hydroponic apparatus 200 in Embodiment 1.

As illustrated in Fig. 7, the support portion 60 include multiple protrusions that support the new tubers 6 and multiple recesses that are positioned between the multiple protrusions and function as a nutrient-solution supply portion in the presence of the second nutrient solution 9X. Here, in this embodiment, the protrusions and the recesses are composed of a net member 68 and a plate member 69 supporting the net member 68. Specifically, the protrusions are composed of the net member 68, and the recesses are composed of a large number of holes of the net member and the surface of the plate member 69.

### Other Embodiments

In order to grow the plant 1 well, the foregoing embodiments are configured such that the first nutrient solution 9 is absorbed from the main roots 4, and the second nutrient solution 9X is absorbed from the first rootlets 6a and the second rootlets 3a. However, instead of at least one of the first nutrient solution 9 and the second nutrient solution 9X, water can be used as far as the plant 1 grows well.

### Mutual Combinations of Foregoing Embodiments

The configurations in the foregoing embodiments may be exchanged or combined as long as it does not cause technical contradiction.

Hereinafter, description will be made of characteristic configurations of the hydroponic apparatus 200 in the embodiments and the advantageous effects that the characteristic configurations provide.
1. The hydroponic apparatus 200 is for growing a plant 1 in which a main stem 2 extends from a seed tuber 10, underground stems 3 and main roots 4 extend from the main stem 2, and new tubers 6 are formed on underground stems 3. The hydroponic apparatus 200 includes a cultivation tank 20, divider 23, and support portion 60. In the cultivation tank 20 is first nutrient solution 9. The divider 23 divides an aboveground space 80 in which the aboveground portions of the plant 1 grow and an underground space 70 in which the underground portion of the plant 1 grow. The support portion 60 divides the underground space 70 into a first space 71 in which the underground stems 3 and the new tubers 6 grow and a second space 72 in which the main roots 4 grow. The support portion 60 supports the seed tuber 10, the underground stems 3, and the new tubers 6 such that the seed tuber 10, the underground stems 3, and the new tubers 6 are not soaked in the first nutrient solution 9, but that the main roots 4 are soaked in the first nutrient solution 9. The support portion 60 has a nutrient-solution supply portion 61 which directly supplies second nutrient solution 9X which is the same as or different from the first nutrient solution 9 to either first rootlets 6a extending from the new tubers 6 or second rootlets 3a extending from the underground stems 3 or both. With this, it is possible to supply the second nutrient solution 9X to the new tubers 6 through either the first rootlets 6a or the second rootlets 3a or both.
2. The nutrient-solution supply portion 61 may be a liquid retainable member that absorbs and retains the second nutrient solution 9X. The liquid retainable member is exposed on the upper face of the support portion 60 such that the liquid retainable member is in direct contact with either the first rootlets 6a or the second rootlets 3a or both. With this, it is possible to supply the second nutrient solution 9X reliably to either the first rootlets 6a or the second rootlets 3a or both.
3. The liquid retainable member may have extension portions 611 hanging down from the support portion 60. In this case, the extension portions 611 may be soaked in the first nutrient solution 9 so that the first nutrient solution 9 can be supplied to the liquid retainable member.
4. The support portion 60 may include multiple protrusions 66 that support the new tubers 6 and one or more recesses 67 that are positioned between the multiple protrusions 66 and function as a nutrient-solution supply portion in the presence of the second nutrient solution 9X. With these, the recesses 67 serving as a nutrient-solution supply portion can retain enough second nutrient solution 9X, reducing a risk of the second nutrient solution 9X running short.
5. It is preferable that the cultivation tank 20 further include a spray N that sprays the second nutrient solution 9X into the first space 71 to supply the second nutrient solution 9X to the nutrient-solution supply portion 61. With this, it is possible to supply the second nutrient solution 9X more easily to either the first rootlets 6a or the second rootlets 3a or both.
6. It is preferable that the hydroponic apparatus 200 further include a nutrient-solution flow path 90 that leads the second nutrient solution 9X from the outside of the cultivation tank 20 to the nutrient-solution supply portion 61. With this, it is possible to supply the second nutrient solution 9X from the outside of the cultivation tank 20 to the nutrient-solution supply portion 61.

This application claims the benefits of priority based on Japanese Patent Application No. 2017-079756 filed on April 13, 2017, the entire contents of which are incorporated herein by reference.

### REFERENCE SIGNS LIST

- 1: Plant
- 2: Main stem
- 3: Underground stem
- 3a: Second rootlet
- 4: Main root
- 6: New tuber
- 6a: First rootlet
- 9: First nutrient solution
- 9X: Second nutrient solution
- 10: Seed tuber
- 20: Cultivation tank
- 23: Divider
- 60: Support portion
- 61: Nutrient-solution supply portion
- 66: Protrusion
- 67: Recess (nutrient-solution supply portion)
- 70: Underground space
- 71: First space
- 72: Second space
- 80: Aboveground space
- 200: Hydroponic apparatus
- 611: Extension portion
- N: Spray

## Claims

1. A hydroponic apparatus for growing a plant in which a main stem extends from a seed tuber, an underground stem and a main root extend from the main stem, and a new tuber is formed on the underground stem, comprising:
a cultivation tank that contains first nutrient solution;
a divider that divides an aboveground space in which an aboveground portion of the plant grows and an underground space in which an underground portion of the plant grows; and
a support portion that divides the underground space into a first space in which the underground stem and the new tuber grow and a second space in which the main root grows and that supports the seed tuber and the new tuber such that the seed tuber, the new tuber, and the underground stem are not soaked in the first nutrient solution, and that the main root is soaked in the first nutrient solution, wherein
the support portion has a nutrient-solution supply portion that supplies second nutrient solution which is the same as or different from the first nutrient solution directly to at least one of a first rootlet extending from the new tuber and a second rootlet extending from the underground stem.

2. The hydroponic apparatus according to claim 1, wherein
the nutrient-solution supply portion is a liquid retainable member that absorbs and retains the second nutrient solution, and
the liquid retainable member is exposed on an upper face of the support portion such that the liquid retainable member is in direct contact with at least one of the first rootlet and the second rootlet.

3. The hydroponic apparatus according to claim 2, wherein
the liquid retainable member has an extension portion hanging down from the support portion, and
the first nutrient solution stored in the cultivation tank is supplied to the liquid retainable member with the hanging-down extension portion being soaked in the first nutrient solution.

4. The hydroponic apparatus according to claim 1, wherein
the support portion includes multiple protrusions that support the new tuber and one or more recesses that are positioned between the multiple protrusions and function as the nutrient-solution supply portion in the presence of the second nutrient solution.

5. The hydroponic apparatus according to any one of claims 1 to 4, further comprising
a spray that sprays the second nutrient solution into the first space to supply the second nutrient solution to the nutrient-solution supply portion.

6. The hydroponic apparatus according to any one of claims 1 to 5, further comprising
a nutrient-solution flow path that leads the second nutrient solution from outside of the cultivation tank to the nutrient-solution supply portion.
